# EUROPÄISCHE PATENTSCHRIFT

(11) **EP 1 161 298 B1**
(45) Veröffentlichungstag und Bekanntmachung des Hinweises auf die Patenterteilung: **26.03.2003**
(21) Anmeldenummer: 00915159.8
(22) Anmeldetag: 01.03.2000
(51) Int. Cl.: B01J 33/00, B01J 37/14

(54) **VERFAHREN ZUR PASSIVIERUNG PYROPHORER KATALYSATOREN**
METHOD FOR PASSIVATING PYROPHOROUS CATALYSTS
PROCEDE DE PASSIVATION DE CATALYSEURS PYROPHORIQUES

(30) Priorität: 03.03.1999 DE 19909175
(43) Veröffentlichungstag der Anmeldung: 12.12.2001
(73) Patentinhaber: KataLeuna GmbH Catalysts, 06236 Leuna (DE)
(72) Erfinder: BIRKE, Peter, D-06179 Langenbogen (DE); GEYER, Reinhard, D-06120 Halle (DE); HIMMEL, Wigbert, D-06618 Naumburg (DE); HUNOLD, Jürgen, D-06108 Halle (DE); KÖGLER, Wolfgang, D-06130 Halle (DE); SCHÖDEL, Rainer, D-06179 Teutschenthal (DE)
(74) Vertreter: Schrell, Andreas, Dr.
(86) Internationale Anmeldenummer: EP0001710
(87) Internationale Veröffentlichungsnummer: WO00051733

(56) Entgegenhaltungen:
- US-A- 3 033 802
- US-A- 4 090 980
- DATABASE WPI Section Ch, Week 198639 Derwent Publications Ltd., London, GB; Class J04, AN 1986-256656 XP002140053 & RO 88 849 A (INST CHIM ENERG CHIM), 31. März 1986 (1986-03-31)

## Beschreibung

Die vorliegende Erfindung betrifft ein Verfahren zur Passivierung pyrophorer Festkörper, insbesondere Katalysatoren sowie die so hergestellten Festkörper selbst.

Die Passivierung von Nickel-Trägerkatalysatoren ist bekannt. Die bekannten Verfahren beruhen in vielen Fällen auf einer partiellen Oxidation der Metalloberfläche. In den DE-AS 1 299 286, DE-OS 2 209 000 und DE-OS 2 530 818 werden Passivierungsverfahren in wäßriger Lösung beschrieben. Als Oxidationsmittel werden Wasserstoffperoxid, Hypochloride oder Sauerstoff eingesetzt. Die beschriebenen Verfahren sind jedoch nicht universell einsetzbar, da für viele Anwendungsfälle vor dem Einsatz des Katalysators das Wasser entfernt werden müßte.

In den US-PS 2,565,347, US-PS 3,868,332, DD 156 169, DD 156 345, DD 156 347, DD 157 161 und RO 68 600 wird die Passivierung von phyrophoren nickelhaltigen Katalysatoren mit sauerstoffhaltigem Stickstoff offenbart. Gemäß der beschriebenen Verfahren wird der Katalysator vor der Passivierung zur Desorption des Wasserstoffs von der Katalysatoroberfläche mit Stickstoff gespült. Die offenbarten Verfahren unterscheiden sich voneinander hinsichtlich der eingestellten Temperaturen der DeSorption und Passivierung. Die beschriebenen Verfahren weisen unter anderem den Nachteil auf, daß im technischen Maßstab uneinheitliche Produkte erhalten werden und lange Passivierungszeiten erforderlich sind.

In der EP-A 89 761 wird die Passivierung eines Nickel-Al₂O₃-Katalysators durch Behandeln des Katalysators mit CO₂ bei Temperaturen von 175 bis 200°C über einen Zeitraum von mindestens 30 Minuten und anschließendem Abkühlen im CO₂ auf Umgebungstemperatur beschrieben.

Die US-PS 4,090,980 offenbart die Passivierung eines Katalysators mit einem Sauerstoff-Stickstoff-Gemisch nach vorheriger Behandlung mit CO₂, wobei der Katalysator nach der Reduktion zunächst bei 149°C im Kreislauf mit Inertgas behandelt, anschließend auf eine Temperatur von 10 bis 38°C abgekühlt, danach der CO₂-Gehalt im Kreislaufgas schrittweise auf 80 Vol.-% erhöht und nachfolgend Sauerstoff bis zu einer Konzentration von 0,05 Vol.-% dosiert wird. Die Behandlung mit diesem Gemisch erfolgt, bis 25 % der Monoschicht der Katalysatoroberfläche mit Sauerstoff belegt sind. Danach wird die Sauerstoffkonzentration auf 1 Vol.-% erhöht und, nachdem die Monoschicht der Katalysatoroberfläche vollständig durch Sauerstoffspezies gebildet wurde, wird der Sauerstoffgehalt langsam erhöht und der CO₂-Gehalt des Gasgemisches verringert.

Eine kombinierte CO₂- und O₂-Behandlung wird auch in der SU 1 344 404 offenbart. Die Passivierung wird dabei durchgeführt, indem der Katalysator mit CO₂ bei Temperaturen von 250 bis 300°C behandelt, anschließend im CO₂-O₂-Gemisch mit Sauerstoffkonzentrationen von 0,4 bis 2 Vol.-% bei Temperaturen von 100 bis 250°C über eine Zeitdauer von 20 Minuten behandelt, der Katalysator unter CO₂ auf Umgebungstemperatur abgekühlt und anschließend die Katalysatorschüttung mit Luft durchströmt wird.

In der DE 3 629 631 ist die Passivierung von nickelhaltigen Katalysatoren mit CO₂, Wasserdampf oder Sauerstoff beschrieben. Wenn die Passivierung mit CO₂ im Temperaturbereich von 25 bis 250°C vorgenommen worden ist, sollte entsprechend dieser Offenbarung nach der CO₂-Behandlung eine weitere Passivierung mit Sauerstoff-Stickstoff-Gemischen erfolgen.

Zusammenfassend läßt sich feststellen, daß die bekannten Passivierungsverfahren aufgrund der sehr langen Passivierungszeiten, insbesondere bei Passivierung mit Sauerstoff-Stickstoff-Gemischen, hohe Kosten verursachen und zudem ungleichmäßig passivierte Katalysatoren erhalten werden.

Der vorliegenden Erfindung liegt daher das technische Problem zugrunde, ein Verfahren zur Passivierung pyrophorer Festkörper, insbesondere pyrophorer Katalysatoren bereitzustellen, das mit einem geringen Kostenaufwand zu gleichmäßiger passivierten Festkörpern, insbesondere Katalysatoren führt.

Die Erfindung löst das technische Problem durch die Bereitstellung eines Verfahrens zur Passivierung eines, vorzugsweise reduzierten und/oder vorzugsweise inertisierten, pyrophoren Festkörpers, insbesondere Katalysators, besonders bevorzugt Metall-Trägerkatalysators, wobei der Katalysator in einem ersten Verfahrensschritt a) in einem CO₂-N₂-Gasgemisch mit einem CO₂-Gehalt von 0,5 bis 10 Vol.-% bei Temperaturen von 91°C bis 350°C mindestens 30 Minuten behandelt, in einem zweiten Verfahrensschritt b) anschließend in dem in Schritt a) genannten Gasgemisch auf eine Temperatur von maximal 90°C abgekühlt, anschließend in einem dritten Verfahrensschritt c) nach Erreichen der Temperatur von maximal 90°C in einer ersten Passivierungsphase dem Gasgemisch Sauerstoff, vorzugsweise Luft, bis zu einem Gehalt an 0,2 bis 1,5 Vol.-% Sauerstoff zugesetzt und der Katalysator in dem Gemisch mindestens 30 Minuten unter Rütteln behandelt und anschließend in einem vierten Verfahrensschritt d) der CO₂-Gehalt in dem Gasgemisch gemäß Schritt c) in einer zweiten Passivierungsphase auf <0,1 Vol.-% reduziert und der O₂-Gehalt auf 1,5 bis 21 Vol.-% erhöht wird.

Die erfindungsgemäße Verfahrensweise weist den Vorteil kurzer Stabilisierungszeiten auf, wobei gleichzeitig gut reaktivierbare Katalysatoren mit sehr guter thermischer Stabilität erhalten werden. In vorteilhafter Weise werden die Katalysatoren besonders gleichmäßig passiviert. Tatsächlich war es überraschend, daß durch das Behandeln mit CO₂-armen Inertgasen unter den angegebenen Bedingungen sehr gleichmäßig und leicht reaktivierbare Katalysatoren erhalten wurden.

Im Zusammenhang mit der vorliegenden Erfindung wird unter einem pyrophoren Festkörper ein selbstentzündlicher oder zur Selbstentzündung neigender fester Körper verstanden, insbesondere ein Körper der in feinster Verteilung an der Luft aufglüht.

In einer besonders bevorzugten Ausführungsform betrifft die Erfindung ein vorgenanntes Verfahren, wobei der pyrophore Festkörper ein pyrophorer Metall-Trägerkatalysator ist. Die Erfindung betrifft demgemäß beispielsweise Metall-Trägerkatalysatoren, wobei die Metallkomponente Nickel, Kobalt, Kupfer, Eisen, Aluminium, Zink oder Mischungen oder Legierungen zweier oder mehrerer dieser Substanzen ist. In bevorzugter Ausführungsform besteht oder enthält die Trägerkomponente des erfindungsgemäß eingesetzten Metall-Trägerkatalysators zum Beispiel Al₂O₃, SiO₂, SiO₂ · Al₂O₃, TiO₂, ZrO₂, Gemische dieser Oxide, Aktivkohle, Zeolithe, Tone, natürliche Silikate oder Gemische zweier oder mehrerer dieser Stoffe. Erfindungsgemäß ist auch vorgesehen, daß die Träger chemisch modifiziert vorliegen können, zum Beispiel durch Behandeln mit Phosphat-, Sulfat-, Fluoridoder Chlorid-Verbindungen. Selbstverständlich ist es erfindungsgemäß auch möglich, daß der eingesetzte pyrophore Metall-Trägerkatalysator dotiert ist, beispielsweise durch Zusätze von Elementen der 6. bis 8. Nebengruppe des PSE, wie Platin, Palladium, Rhodium, Chrom, Tantal, Titan, Eisen oder deren Gemischen etc..

Selbstverständlich kann der erfindungsgemäß eingesetzte Metall-Trägerkatalysator zusätzlich Zuschlagstoffe wie Verformungshilfsmittel, Gleitmittel, Plastifizierer, Porenbildner, Befeuchtungsmittel etc. enthalten.

Das hier beschriebene Verfahren zur Passivierung eines Festkörpers geht von einem reduzierten und inertisierten Festkörper aus. Die Reduktion des Festkörpers, insbesondere Katalysators, kann durch Behandlung des Katalysators in einem Wasserstoffstrom unter erhöhten Temperaturen stattfinden. Nach der Reduktion wird der Katalysator gegebenenfalls im Stickstoffstrom inertisiert. Die Erfindung sieht also in bevorzugter Weise vor, daß der zu passivierende Festkörper, insbesondere Katalysator, vor der Passivierung reduziert und/oder inertisiert wird. Die Reduzierung kann durch Behandeln des Festkörpers mit einem Wasserstoffstrom bei Temperaturen von 250 bis 500°C, bei einer Belastung von 250 bis 3000 v/vh und einer Aufheizgeschwindigkeit von 50°C/h bis 200°C/h durchgeführt werden, wobei Zeiträume von 2 Stunden bis 16 Stunden bei Reduktionstemperatur bevorzugt werden. Anschließend kann eine Inertisierung unter folgenden Bedingungen durchgeführt werden: Bei Reduktionstemperatur wird von Wasserstoffströmung auf Stickstoffströmung umgestellt, ca. 30 Minuten bei dieser Temperatur inertisiert und danach im Stickstoffstrom auf die Temperatur der Behandlung mit dem N₂-CO₂-Gemisch abgekühlt, wobei die N₂-Gasbelastung 250 bis 3000 v/v h beträgt.

Die während der ersten Passivierungsphase gemäß Schritt c) vorgesehene Zugabe von Sauerstoff kann vorzugsweise in Form der Zugabe von Luft bis zu der angegebenen Sauerstoffkonzentration geschehen.

Selbstverständlich kann der Sauerstoff jedoch auch zum Beispiel in reiner Form hinzugegeben werden.

Die Erfindung betrifft in einer bevorzugten Ausführungsform ein vorgenanntes Verfahren, wobei das erfindungsgemäße Verfahren in einem Katalysatorbett kontinuierlich oder im Batch-Verfahren durchgeführt wird, insbesondere mit einem Katalysatorbett, dessen Höhe zum Durchmesser-Verhältnis im Bereich von 0,05 bis 1 liegt.

In einer weiteren bevorzugten Ausführungsform sieht die Erfindung ein vorgenanntes Verfahren vor, wobei die Konzentration des CO₂ während der Behandlung mit dem CO₂-N₂-Gemisch gemäß des ersten Verfahrensschrittes a) 1 bis 2,5 Vol.-% beträgt.

In einer weiteren bevorzugten Ausführungsform sieht die Erfindung ein vorgenanntes Verfahren vor, wobei die Gasbelastung während der Behandlung mit dem CO₂-N₂-Gemisch gemäß des ersten Verfahrensschrittes a) 500 bis 10000 v/v h beträgt. In einer weiteren bevorzugten Ausführungsform sieht die Erfindung vor, daß das vorgenannte Verfahren eine Gasbelastung während der Behandlung mit dem CO₂-N₂-Gemischs gemäß des ersten Verfahrensschritts a) und/oder während der Behandlung mit dem CO₂-N₂-O₂-Gasgemisch gemäß des dritten und vierten Verfahrensschrittes c) und d) 100 bis 3000 v/v h beträgt.

Die Erfindung sieht in einer weiteren bevorzugten Ausführungsform vor, daß das vorgenannte Verfahren die Behandlung in dem CO₂-N₂-O₂-Gasgemisch gemäß des dritten und vierten Verfahrensschrittes c) und d) für einen Zeitraum von mehr als 30 Minuten, zum Beispiel 33 Minuten bis 8 Stunden durchgeführt wird. Der Verfahrensschritt d) kann in bevorzugter Ausführung über einen Zeitraum von mindestens 3 Minuten durchgeführt werden.

Die Erfindung betrifft in einer weiteren Ausbildung ein vorgenanntes Verfahren, wobei die zeitliche Dauer der Behandlung gemäß des dritten Verfahrensschrittes c), also der ersten Passivierungsphase, zu der zeitlichen Dauer des Verfahrensschrittes gemäß des vierten Verfahrensschrittes d), also der zweiten Passivierungsphase, 9:1 beträgt.

In einer weiteren bevorzugten Ausführungsform betrifft die Erfindung ein vorgenanntes Verfahren, wobei die Temperatur der Behandlung des Katalysators mit dem CO₂-N₂-O₂-Gasgemisch gemäß Schritt c) und/oder d) 50 bis 70°C beträgt.

In einer weiteren bevorzugten Ausführungsform sieht die Erfindung ein vorgenanntes Verfahren vor, wobei die CO₂-Konzentration im CO₂-N₂-O₂-Gasgemisch während der Behandlung gemäß des dritten Verfahrensschrittes c) 0,5 bis 1,5 Vol.-% beträgt. Die Erfindung kann in bevorzugter Weise vorsehen, den CO₂-Gehalt des Gemisches aus Schritt a) für die Durchführung des Schrittes c) herabzusetzen, zum Beispiel auf den vorgenannten Bereich.

Gemäß einer weiteren bevorzugten Ausbildung der vorliegenden Erfindung wird ein vorgenanntes Verfahren bereitgestellt, wobei die O₂-Konzentration im CO₂-N₂-O₂-Gasgemisch während der Behandlung gemäß des dritten Verfahrensschrittes c) 0,25 bis 0,8 Vol.-% beträgt.

In einer weiteren bevorzugten Ausbildung der Erfindung beträgt die O₂-Konzentration während der Behandlung gemäß des vierten Verfahrensschrittes d) 5 bis 10 Vol.-%.

Die Erfindung betrifft in einer weiteren Ausgestaltung ein vorgenanntes Verfahren, wobei vorgesehen ist, daß das Rütteln des Katalysatorbettes gemäß des dritten und/oder vierten Verfahrensschrittes c) und/oder d) in Zeitabständen von 10 bis 20 Minuten über einen Zeitraum von jeweils 0,5 bis 2 Minuten vorgenommen wird. Es ist vorteilhaft, Rüttelfrequenzen von 10 bis 50 Hz einzustellen.

Selbstverständlich ist es auch möglich, insbesondere bei pulverförmigen Katalysatoren und Katalysatoren mit sehr hohen Festigkeiten, das Katalysatorbett durch Erzeugen einer Wirbelschicht oder durch Anordnung in einem Drehrohrofen in Bewegung zu setzen. Ein wesentlicher Gesichtspunkt der vorliegenden Erfindung ist es in jedem Fall, den Katalysator zumindest zeitweise während der Passivierungsphasen gemäß der Verfahrensschritte c) und d) in dem Sauerstoff-Kohlenstoffdioxid-Stickstoff-Gemisch zu bewegen, beispielsweise in einem Bewegtbett.

Die Erfindung betrifft auch einen passivierten Festkörper, insbesondere einen passivierten Metall-Trägerkatalysator, der gemäß eines der vorliegenden Verfahren hergestellt worden ist. Derartige Katalysatoren zeichnen sich durch eine gute Reaktivierbarkeit, eine ausgezeichnete thermische Luftstabilität und eine gleichmäßige Passivierung aus.

Die Erfindung wird anhand der folgenden Beispiele näher erläutert.

### Beispiele

Für die erfindungsgemäßen und Vergleichsbeispiele wurde ein Ni-SiO₂-Katalysator (2 mm Stränge) mit einem Ni-Gehalt von 62,6 Masse-% eingesetzt, der vor der Passivierung nach folgendem Verfahren reduziert wurde: 25 l des Katalysators wurden im Wasserstoffstrom mit einer Belastung von 1250 v/v h und einer Aufheizgeschwindigkeit von 50°C/h auf 445°C geheizt und 5 Stunden bei dieser Temperatur reduziert. Der reduzierte Katalysator besitzt eine Ni-Oberfläche von 42,9 m²/g_{Kat}.

### Beispiel 1 (erfindungsgemäß)

Die Passivierung wird in einem Reaktor ausgeführt, der mit einer Rüttelvorrichtung ausgerüstet ist und in dem das Höhe zu Durchmesser-Verhältnis des Katalysatorbettes 0,2 beträgt. Nach der Reduktion wird der Katalysator im Stickstoffstrom mit einer Belastung von 2000 v/v h auf 300°C abgekühlt. Bei dieser Temperatur wird dem Stickstoff CO₂ zugesetzt bis eine Konzentration von 1,5 Vo.-% im Gaskreislauf gemessen wird. Anschließend wird der Katalysator in diesem Gasgemisch innerhalb von 1 Stunde auf 60°C abgekühlt. Nach Erreichen dieser Temperatur wird durch Zudosieren von Luft ein O₂-Gehalt von 0,25 Vol.-% eingestellt, der CO₂-Gehalt im Kreislaufgas auf 0,8 Vol.-% herabgesetzt und der Katalysator mit diesem Gasgemisch 2,5 Stunden behandelt. Während dieser Behandlung bei 60°C wird das Katalysatorbett in Zeitabständen von 15 Minuten über einen Zeitraum von 40 Sekunden mit einer Frequenz von 35 Hz gerüttelt. Anschließend wird der O₂-Gehalt auf 5 Vol.-% erhöht, der CO₂-Gehalt auf 0,05 Vol.-% herabgesetzt und der Katalysator in diesem Gasgemisch 15 Minuten behandelt. Die Gesamtstabilisierungszeit beträgt ca. 4,5 Stunden.

### Beispiel 2

Die Passivierung wird im gleichen Reaktor ausgeführt wie im erfindungsgemäßen Beispiel 1. Der Katalysator wird nach der Reduktion im Stickstoffstrom mit einer Belastung von 1500 v/v h auf 180°C abgekühlt. Bei dieser Temperatur wird dem Stickstoff CO₂ zugesetzt bis eine Konzentration von 2,5 Vol.-% im Gaskreislauf gemessen wird. Der Katalysator wird 30 Minuten bei dieser Temperatur mit dem CO₂-N₂-Gemisch behandelt, anschließend in diesem Gasgemisch innerhalb von 0,5 Stunden auf 50°C abgekühlt und bei dieser Temperatur nach Luftzugabe mit einem O₂-CO₂-N₂-Gemisch im Kreislauf mit einem CO₂-Gehalt von 1,8 Vol.-% und einem O₂-Gehalt von 0,5 Vol.-% über einen Zeitraum von 3 Stunden stabilisiert. Während dieser Behandlung bei 50°C wird das Katalysatorbett in Zeitabständen von 10 Minuten über einen Zeitraum von 40 Sekunden mit einer Frequenz von 35 Hz gerüttelt. Abschließend wird der O₂-Gehalt auf 8 Vol.-% erhöht, der CO₂-Gehalt auf 0,05 Vol.-% herabgesetzt und der Katalysator in diesem Gasgemisch 20 Minuten behandelt. Die Gesamtstabilisierungszeit beträgt ca. 5 Stunden.

### Beispiel 3 (Vergleichsbeispiel)

Die Stabilisierung wurde in einem Röhrenofen mit einem Höhe zu Durchmesser-Verhältnis des Katalysatorbettes von 8 vorgenommen. Der Katalysator wird nach der Reduktion im Stickstoffstrom mit einer Belastung von 1500 v/v h auf 40°C abgekühlt. Bei dieser Temperatur wird dem Stickstoff O₂ zugesetzt bis eine Konzentration von 0,3 Vol.-% im Gaskreislauf gemessen wird. Der Katalysator wird danach 20 Stunden in diesem O₂-N₂-Gemisch behandelt. Abschließend wird der O₂-Gehalt auf 8 Vol.-% erhöht und der Katalysator in diesem Gasgemisch 50 Minuten behandelt. Die Gesamtstabilisierungszeit beträgt ca. 22 Stunden.

### Beispiel 4 (Vergleichsbeispiel)

Der reduzierte Katalysator wird nach der Reduktion im Stickstoffstrom auf Raumtemperatur abgekühlt, danach über einen Zeitraum von 2 Stunden mit einer Belastung von 1000 v/v h mit reinem CO₂ behandelt und abschließend wurde über einen Zeitraum von 19 Stunden Luft durch die Probe geleitet, wobei die Luftmenge so gewählt wurde, daß die Temperatur in der Katalysatorschüttung 80°C nicht überschritt. Die Gesamtstabilisierungszeit beträgt ca. 21 Stunden.

### Beispiel 5 Vergleich der Katalysatoren hinsichtlich ihrer Reaktivierbarkeit, thermalen Luftstabilität und katalytischen Aktivität

Die Katalysatoren wurden mittels TPR charakterisiert. Die TPR-Untersuchungen wurden mit einem Ar-H₂-Gemisch mit 10 Vol.-% H₂ vorgenommen; die Aufheizgeschwindigkeit betrug 10°C/Minute. Als Maß für die Reaktivierbarkeit des passivierten Katalysators diente die Lage des Maximums des TPR-Spektrums: je niedriger die Lage des Maximums, desto leichter ist der Katalysator reaktivierbar. Die Ergebnisse für die einzelnen Beispiele sind in der Tabelle zusammengestellt.

Des weiteren wurde die thermische Luftstabilität der Katalysatoren ermittelt. Hierzu wurden jeweils 20 g des Katalysators an der Luft mit einer Aufheizgeschwindigkeit von 10°C/Minute hochgeheizt und die Temperatur in der Katalysatorschüttung verfolgt. Als Maß für die thermische Stabilität dient die Anspringtemperatur. Die Anspringtemperatur ist die Temperatur, bei der der Katalysator abbrennt, was an einem sehr starken Temperaturanstieg in der Katalysatorschüttung nachweisbar ist. Für eine gute Handhabkeit des Katalysators sind Anspringtemperaturen oberhalb von 90°C anzustreben.

Zur katalytischen Charakterisierung der Katalysatoren wurde der Benzolhydriertest eingesetzt: 100 mg des Katalysators wurden im Wasserstoffstrom (3 l/h) mit einer Aufheizgeschwindigkeit von 5°C/Minute auf 100°C hochgeheizt und 1 Stunde bei dieser Temperatur reaktiviert. Danach wird ein Wasserstoff-Benzol-Gemisch (5 l H₂/h, 0,5 ml Benzol/h) durch die Katalysatorschüttung geführt. Nach einer Stunde wird das Reaktionsgemisch mittels Gaschromatographie analysiert. Der Umsatz von Benzol zu Cyclohexan ist ein Maß für die katalytische Aktivität. Die Ergebnisse sind ebenfalls in der Tabelle zusammengestellt.

**Tabelle**

| Katalysator aus | Temperatur des Maximums der TPR-Kurve in °C | Anspringtemperatur in °C | Benzolumsatz in % |
|---|---|---|---|
| Beispiel 1 (erfindungsgemäß) | 95 | 120 | 36 |
| Beispiel 2 (erfindungsgemäß) | 90 | 123 | 38 |
| Beispiel 3 (Vergleichsbeispiel) | 184 | 80 | 11 |
| Beispiel 4 (Vergleichsbeispiel) | 191 | 197 | 6 |

Die Ergebnisse verdeutlichen die Vorzüge des erfindungsgemäßen Verfahrens: Bei kurzen Stabilisierungszeiten und bei einer guten Reaktivierbarkeit wird eine sehr gute thermische Luftstabilität der Katalysatoren erreicht.

## Patentansprüche

1. Verfahren zur Passivierung eines pyrophoren Festkörpers, wobei der Festkörper
a) in einem CO₂-N₂-Gasgemisch mit einem CO₂-Gehalt von 0,5 bis 10 Vol.-% bei Temperaturen von 91°C bis 350°C mindestens 30 Minuten behandelt,
b) anschließend in dem CO₂-N₂-Gasgemisch gemäß Schritt a) auf eine Temperatur von maximal 90°C abgekühlt,
c) nach Erreichen der in Schritt b) genannten Temperatur in einer ersten Passivierungsphase dem CO₂-N₂-Gasgemisch Sauerstoff bis zu einem Gehalt von 0,2 bis 1,5 Vol.-% zugesetzt und der Katalysator in dem CO₂-N₂-O₂-Gasgemisch mindestens 30 Minuten unter Rütteln behandelt,
d) und anschließend unter Rütteln in einer zweiten Passivierungsphase der CO₂-Gehalt in dem CO₂-N₂-O₂-Gasgemisch auf <0,1 Vol.-% verringert und der Sauerstoff-Gehalt auf 1,5 bis 21 Vol.-% erhöht wird.

2. Verfahren nach Anspruch 1, wobei der Festkörper ein Katalysator, insbesondere ein Metall-Träger-Katalysator ist.

3. Verfahren nach Anspruch 1 oder 2, wobei der Festkörper vor der Passivierung reduziert wird.

4. Verfahren nach einem der vorhergehenden Ansprüche, wobei der Festkörper vor der Passivierung und nach der gegebenenfalls erfolgenden Reduktion inertisiert wird.

5. Verfahren nach einem der vorhergehenden Ansprüche, wobei das Metall Nickel, Kobalt, Kupfer, Eisen, Aluminium, Zink oder ein Gemisch oder eine Legierung zweier oder mehrerer dieser Metalle ist.

6. Verfahren nach einem der vorhergehenden Ansprüche, wobei der Träger aus SiO₂, Al₂O₃, SiO₂ · Al₂O₃, ZrO₂, TiO₂, Ton, Zeolith, Aktivkohle, natürlichem Silikat oder einem Gemisch aus zwei oder mehreren dieser Materialien besteht oder diese enthält.

7. Verfahren nach einem der vorhergehenden Ansprüche, wobei das Verfahren in einem Katalysatorbett durchgeführt wird, insbesondere in einem Katalysatorbett, dessen Höhe zur Durchmesser-Verhältnis im Bereich von 0,05 bis 1 liegt.

8. Verfahren nach einem der vorhergehenden Ansprüche, wobei der CO₂-Gehalt während der Behandlung mit dem CO₂-N₂-Gasgemisch gemäß Schritt a) 1 bis 2,5 Vol.-% beträgt.

9. Verfahren nach einem der vorhergehenden Ansprüche, wobei die Gasbelastung während der Behandlung mit dem CO₂-N₂-Gasgemisch gemäß Schritt a) 500 bis 10000 v/v h beträgt.

10. Verfahren nach einem der vorhergehenden Ansprüche, wobei die Gasbelastung während der Behandlung mit dem CO₂-N₂-Gasgemisch gemäß Schritt a) und/oder dem CO₂-N₂-O₂-Gasgemisch gemäß Schritt c) und Schritt d) 1000 bis 3000 v/v h beträgt.

11. Verfahren nach einem der vorhergehenden Ansprüche, wobei der Katalysator länger als 0,5 Stunden, insbesondere 33 Minuten bis 8 Stunden in dem CO₂-N₂-O₂-Gasgemisch gemäß Schritt c) und d) behandelt wird.

12. Verfahren nach einem der vorhergehenden Ansprüche, wobei die Temperatur der Behandlung des Katalysators mit dem CO₂-N₂-O₂-Gasgemisch gemäß Schritt c) und Schritt d) 50 bis 70°C beträgt.

13. Verfahren nach einem der vorhergehenden Ansprüche, wobei der CO₂-Gehalt im CO₂-N₂-O₂-Gasgemisch während der Behandlung gemäß Schritt c) 0,5 bis 1,5 Vol.-% beträgt.

14. Verfahren nach einem der vorhergehenden Ansprüche, wobei die Zeitdauern der Behandlung gemäß der Schritte c) zu d) in einem Verhältnis von 9:1 stehen.

15. Verfahren nach einem der vorhergehenden Ansprüche, wobei der O₂-Gehalt im CO₂-N₂-O₂-Gasgemisch während der Behandlung gemäß Schritt c) 0,25 bis 0,8 Vol.-% und/oder während Schritt d) 5 bis 10 Vol.-% beträgt.

16. Verfahren nach einem der vorhergehenden Ansprüche, wobei das Rütteln des Katalysatorbettes während der Verfahrensschritte c) und/oder d) in Zeitabständen von 10 bis 20 Minuten über einen Zeitraum von jeweils 0,5 bis 2 Minuten vorgenommen wird.

17. Passivierter Metall-Träger-Katalysator, erhältlich durch ein Verfahren der vorhergehenden Ansprüche.

## Claims

1. A method of passivating a pyrophoric solid body, wherein the solid body is
a) treated in a CO₂-N₂ gas mixture with a CO₂ content from 0.5 to 10% by volume at temperatures from 91°C to 350°C for at least 30 minutes,
b) then cooled in the CO₂-N₂ gas mixture according to step
a) to a temperature of 90°C maximum,
c) after attaining the temperature recited in step b) oxygen is added in a first passivating phase to the CO₂-N₂ gas mixture up a content of 0.2 to 1.5% by volume and the catalyst is treated in the CO₂-N₂-O₂ gas mixture for at least 30 minutes while shaking,
d) and then the CO₂ content in the CO₂-N₂-O₂ gas mixture is reduced in a second passivating phase to <0.1% by volume and the oxygen content is raised to 1.5 to 21% by volume.

2. A method according to claim 1, wherein the solid body is a catalyst, especially a metal supported catalyst.

3. A method according to claim 1 or 2, wherein the solid body is reduced before the passivation.

4. A method according to any of the preceding claims, wherein the solid body is rendered inert before the passivation and after the optionally following reduction.

5. A method according to any of the preceding claims, wherein the metal is nickel, cobalt, copper, iron, aluminium, zinc or a mixture or an alloy of two or more of these metals.

6. A method according to any of the preceding claims, wherein the support consists of or contains SiO₂, Al₂O₃, SiO₂·Al₂O₃, ZrO₂, TiO₂, clay, zeolite, active carbon, natural silicate or a mixture of two or more of these materials.

7. A method according to any of the preceding claims, wherein the method is carried out in a catalyst bed, especially a catalyst bed whose height to diameter ratio lies in the range from 0.05 to 1.

8. A method according to any of the preceding claims, wherein the CO₂ content amounts to 1 to 2.5% by volume during the treatment with the CO₂-N₂ gas mixture according to step a).

9. A method according to any of the preceding claims, wherein the gas utilisation during the treatment with the CO₂-N₂ gas mixture according to step a) amounts to 500 to 10000 v/v h.

10. A method according to any of the preceding claims, wherein the gas utilisation during the treatment with the CO₂-N₂ gas mixture according to step a) and/or the CO₂-N₂-O₂ gas mixture according to step c) and step d) amounts to 1000 to 3000 v/v h.

11. A method according to any of the preceding claims, wherein the catalyst is treated for longer than 0.5 hours, especially 33 minutes to 8 hours in the CO₂-N₂-O₂ gas mixture according to steps c) and d).

12. A method according to any of the preceding claims, wherein the temperature of the treatment of the catalyst with the CO₂-N₂-O₂ gas mixture according to step c) and step d) amounts to 50 to 70°C.

13. A method according to any of the preceding claims, wherein the CO₂ content in the CO₂-N₂-O₂ gas mixture during the treatment according to step c) amounts to 0.5 to 1.5% by volume.

14. A method according to any of the preceding claims, wherein the durations of the treatment according to steps c) to d) are in a ratio of 9:1.

15. A method according to any of the preceding claims, wherein the O₂ content in the CO₂-N₂-O₂ gas mixture during the treatment according to step c) amounts to 0.25 to 0.8% by volume and/or during step d) to 5 to 10% by volume.

16. A method according to any of the preceding claims, wherein the shaking of the catalyst bed during method steps c) and/or d) is effected at intervals from 10 to 20 minutes for a duration in each case from 0.5 to 2 minutes.

17. A passivated metal supported catalyst obtainable by a method of the preceding claims.

## Revendications

1. Procédé de passivation d'un solide pyrophore, dans lequel
a) on traite le solide dans un mélange gazeux CO₂-N₂ ayant une teneur en CO₂ de 0,5 à 10 % en volume à des températures de 91°C à 350°C pendant au moins 30 minutes,
b) puis on le refroidit dans le mélange gazeux CO₂-N₂ selon l'étape a) à une température de 90°C au maximum,
c) après avoir atteint la température mentionnée dans l'étape b) dans une première étape de passivation, on ajoute au mélange gazeux CO₂-N₂ de l'oxygène jusqu'à une teneur de 0,2 à 1,5 % en volume, et on traite le catalyseur dans le mélange gazeux CO₂-N₂-O₂ pendant au moins 30 minutes en le vibrant,
d) puis, en le vibrant, dans une seconde étape de passivation, on réduit la teneur en CO₂ dans le mélange gazeux CO₂-N₂-O₂ à moins de 0,1 % en volume et on augmente la teneur en oxygène à 1,5 à 21 % en volume.

2. Procédé selon la revendication 1, dans lequel le corps solide est un catalyseur, en particulier un catalyseur sur support métallique.

3. Procédé selon la revendication 1 ou 2, dans lequel on réduit le corps solide avant passivation.

4. Procédé selon l'une des revendications précédentes, dans lequel on rend inerte le corps solide avant passivation et après la réduction éventuelle.

5. Procédé selon l'une des revendications précédentes, dans lequel le métal est le nickel, le cobalt, le cuivre, le fer, l'aluminium, le zinc ou un mélange ou un alliage de deux ou plusieurs de ces métaux.

6. Procédé selon l'une des revendications précédentes, dans lequel le support est constitué de SiO₂, Al₂O₃, SiO₂·Al₂O₃, ZrO₂, TiO₂, d'argile, de zéolithe, de charbon actif, de silicate naturel ou d'un mélange de deux ou plusieurs de ces matériaux.

7. Procédé selon l'une des revendications précédentes, dans lequel le procédé est réalisé dans un lit de catalyseur, en particulier dans un lit de catalyseur dont le rapport de la hauteur au diamètre se situe dans un intervalle de 0,05 à 1.

8. Procédé selon l'une des revendications précédentes, dans lequel la teneur en CO₂ au cours du traitement avec le mélange gazeux CO₂-N₂ selon l'étape a) s'élève à 1 à 2,5 % en volume.

9. Procédé selon l'une des revendications précédentes, dans lequel le débit de gaz au cours du traitement avec le mélange gazeux CO₂-N₂ selon l'étape a) s'élève à 500 à 10 000 v/v h.

10. Procédé selon l'une des revendications précédentes, dans lequel le débit de gaz au cours du traitement avec le mélange gazeux CO₂-N₂ selon l'étape a) et/ou le mélange gazeux CO₂-N₂-O₂ selon l'étape c) et l'étape d) s'élève à 1000 à 3000 v/v h.

11. Procédé selon l'une des revendications précédentes, dans lequel on traite le catalyseur pendant plus de 0,5 heure, en particulier pendant 33 minutes à 8 heures dans le mélange gazeux CO₂-N₂-O₂ selon l'étape c) et d).

12. Procédé selon l'une des revendications précédentes, dans lequel la température du traitement du catalyseur avec le mélange gazeux CO₂-N₂-O₂ selon l'étape c) et l'étape d) s'élève à 50 à 70°C.

13. Procédé selon l'une des revendications précédentes, dans lequel la teneur en CO₂ dans le mélange gazeux CO₂-N₂-O₂ au cours du traitement selon l'étape c) s'élève à 0,5 à 1,5 % en volume.

14. Procédé selon l'une des revendications précédentes, dans lequel les durées de traitement selon les étapes c) par rapport à d) se situent dans un rapport de 9 :1.

15. Procédé selon l'une des revendications précédentes, dans lequel la teneur en O₂ dans le mélange gazeux CO₂-N₂-O₂ au cours du traitement selon l'étape c) s'élève à 0,25 à 0,8 % en volume et/ou au cours de l'étape d) à 5 à 10 % en volume.

16. Procédé selon l'une des revendications précédentes, dans lequel on secoue le lit de catalyseur au cours de l'étape c) et/ou d) du procédé à des intervalles de temps de 10 à 20 minutes pendant une durée, respectivement, de 0,5 à 2 minutes.

17. Catalyseur à support métallique passivé, que l'on peut obtenir par un procédé des revendications précédentes.
